# EUROPÄISCHE PATENTSCHRIFT

(11) **EP 1 544 550 B1**
(45) Veröffentlichungstag und Bekanntmachung des Hinweises auf die Patenterteilung: **03.09.2008**
(21) Anmeldenummer: 04029049.6
(22) Anmeldetag: 08.12.2004
(51) Int. Cl.: F24D 3/16

(54) **Heizeinrichtung für Fussböden**
Underfloor heating
Installation de chauffage par le sol

(30) Priorität: 18.12.2003 DE 10361336
(43) Veröffentlichungstag der Anmeldung: 22.06.2005
(73) Patentinhaber: Kälberer, Stefan, 73344 Gruibingen (DE)
(72) Erfinder: Kälberer, Stefan, 73344 Gruibingen (DE)
(74) Vertreter: Jackisch-Kohl, Anna-Katharina

(56) Entgegenhaltungen:
- EP-A- 0 899 516
- US-A- 4 508 162
- US-A- 6 009 612
- PATENT ABSTRACTS OF JAPAN Bd. 2003, Nr. 03, 5. Mai 2003 (2003-05-05) & JP 2002 333148 A (KAMEYAMA TEKKOSHO:KK), 22. November 2002 (2002-11-22)
- PATENT ABSTRACTS OF JAPAN Bd. 1996, Nr. 09, 30. September 1996 (1996-09-30) & JP 08 121788 A (MITSUBISHI MATERIALS CORP), 17. Mai 1996 (1996-05-17)

## Beschreibung

Die Erfindung betrifft eine Heizeinrichtung für Fußböden nach dem Oberbegriff des Anspruches 1, wie sie auch aus US-A-4 508 162 bekannt ist.

Bekannt sind Fußbodenheizungen im Naßverlegesystem, bei denen vor dem Einbringen des Estriches Rohre eingegossen werden. Das durch die Rohre strömende Heizmedium, in der Regel Wasser, erwärmt den kompletten Estrich, der seinerseits die Wärme an den Raum abgibt. Die Vorlauftemperaturen können bei solchen Fußbodenheizungen allerdings nur gering sein, da bei hohen Vorlauftemperaturen Spannungsrisse im Estrich entstehen können.

Es sind auch Fußbodenheizungen im Trockenverlegesystem bekannt, bei dem die Rohre nicht direkt mit dem Estrich in Verbindung kommen. Hierbei werden auf dem Rohfußboden verschiedene Schichten von Haltematten mit den Rohren verlegt, auf die eine Fertigfußbodenschicht aufgebracht wird.

Der Erfindung liegt die Aufgabe zugrunde, die gattungsgemäße Heizeinrichtung so auszubilden, daß sie eine einfache Montage bei optimaler Heizfunktion ermöglicht.

Diese Aufgabe wird bei der gattungsgemäßen Heizeinrichtung erfindungsgemäß mit den kennzeichnenden Merkmalen des Anspruches 1 gelöst.

Bei der erfindungsgemäßen Heizeinrichtung liegen die Bodenplatten auf dem Wärmeleitelement auf, welches das das Heizmedium führende Rohr aufnimmt. Infolge der erfindungsgemäßen Ausbildung kann zunächst die Heizeinrichtung montiert werden, bevor anschließend die Bodenplatten zur Bildung des Fußbodens montiert werden. Das Wärmeleitelement nimmt die Wärme vom Rohr auf und gibt sie an die Bodenplatten ab. Da das Rohr nicht in die Bodenplatten eingebettet ist, sondern an deren Unterseite anliegt, kann die Vorlauftemperatur des Heizmediums hoch sein, ohne daß die Gefahr der Bildung von Spannungsrissen in den Bodenplatten besteht.

Weitere Merkmale der Erfindung ergeben sich aus den weiteren Ansprüchen, der Beschreibung und den Zeichnungen.

Die Erfindung wird anhand zweier in den Zeichnungen dargestellter Ausführungsformen näher erläutert. Es zeigen
- Fig. 1: in perspektivischer Darstellung eine erfindungsgemäße Heizeinrichtung,
- Fig. 2: eine Seitenansicht der Heizeinrichtung gemäß Fig. 1,
- Fig. 3: in vergrößerter Darstellung einen Teil der Heizeinrichtung gemäß Fig. 2,
- Fig. 4: in einer Darstellung entsprechend Fig. 2 eine zweite Ausführungsform einer erfindungsgemäßen Heizeinrichtung,
- Fig. 5 und Fig. 6: jeweils in Draufsicht verschiedene Verlegeformen der Heizeinrichtung,
- Fig. 7: in perspektivischer Darstellung einen Teil einer weiteren Ausführungsform einer erfindungsgemäßen Heizeinrichtung,
- Fig. 8: in einer Darstellung entsprechend Fig. 7 eine weitere Montagestufe der Heizeinrichtung gemäß Fig. 7,
- Fig. 9: in Seitenansicht die Heizeinrichtung gemäß Fig. 7.

Die Fußbodenheizung wird bei einem Hohlraum- bzw. Doppelboden eingesetzt. Auf einem Untergrund 1 stehen Stützen 2, die vorzugsweise höhenverstellbar ausgebildet und auf denen Schienen 3 gelagert sind. Je nach Länge dieser Schienen 3 werden zwei oder mehr Stützen 2 eingesetzt. Auf den Schienen 3 werden Bodenplatten 4 aufgelegt, die aneinanderstoßen und den Fußboden 5 bilden. Die Bodenplatten 4 können aus jedem geeigneten Material bestehen, beispielsweise aus Holz oder aus Kunststoff.

Die Schienen 3 sind in einem solchen Abstand voneinander parallel verlaufend angeordnet, daß die Bodenplatten 4 mit ihren Randbereichen auf den Schienen 3 aufliegen. Vorteilhaft sind die Schienen 3 in einem solchen Abstand zueinander vorgesehen, daß benachbarte Bodenplatten 4 etwa in halber Breite der Schienen 3 aneinanderstoßen. Sie sind im wesentlichen U-förmig ausgebildet und haben einen ebenen Quersteg 6, auf dem die Bodenplatten 4 flächig aufliegen. Die parallel zueinander nach unten in Richtung auf den Untergrund 1 gerichteten Schenkel 7, 8 haben jeweils hakenförmig abgebogene, schräg aufwärts gerichtete Enden 9, 10, in die Traversen 11 eingehängt werden können.

Auf dem Quersteg 6 der Schienen 3 sind mit Abstand voneinander Auflagen 12 angeordnet, die vorteilhaft aus Polyester bestehen und auf denen die Bodenplatten 4 aufliegen. Die Auflagen 12 haben im Ausführungsbeispiel Rechteckform und haben eine Länge, die geringfügig kürzer ist als die Breite des Quersteges 6 der Schienen 3. Die Auflagen 12 können auch anderen Umriß haben.

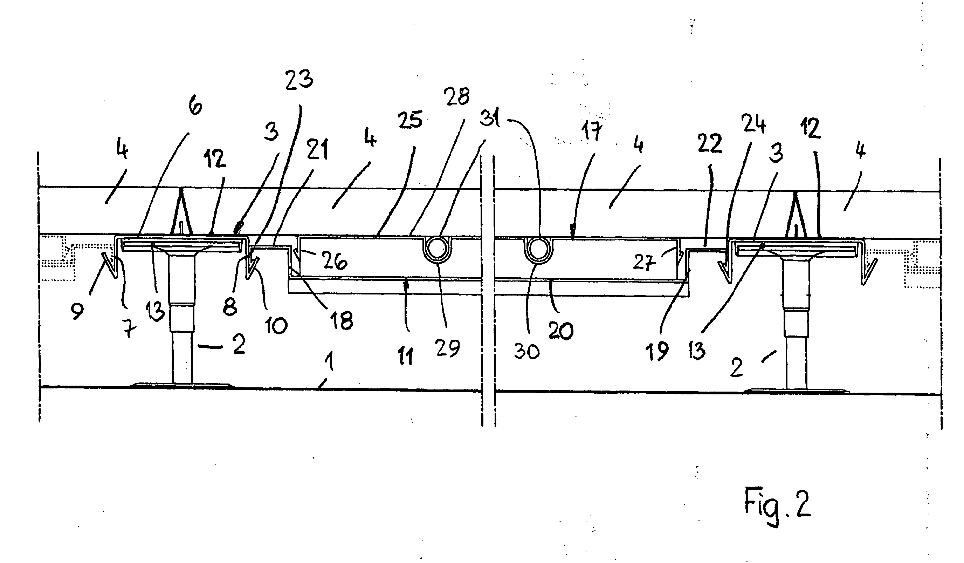

Die Schienen 3 liegen unter Zwischenlage von jeweils wenigstens einer U-förmigen Auflage 13 auf den Stützen 2 auf. Sie sind an ihrem oberen Ende vorteilhaft tellerförmig erweitert, so daß die U-förmigen, schienenförmigen Auflagen 13 sicher auf den Stützen 2 abgestützt werden. Die Auflagen 13 sind geringfügig schmaler als die Schienen 3 (Fig. 2), so daß eine problemlose Montage der Schienen 3 und der U-förmigen Auflagen 13 sichergestellt ist. Die Auflagen 13 sind außerdem wesentlich flacher als die Schienen 3, deren Schenkel 7, 8 die Auflagen 13 seitlich vollständig verdecken.

Die Auflagen 13 können auch kreisförmigen Umriß haben und tellerförmig ausgebildet sein. In diesem Falle ist der Durchmesser der Auflagen 13 kleiner als die Breite des Quersteges 6 der Schienen 3.

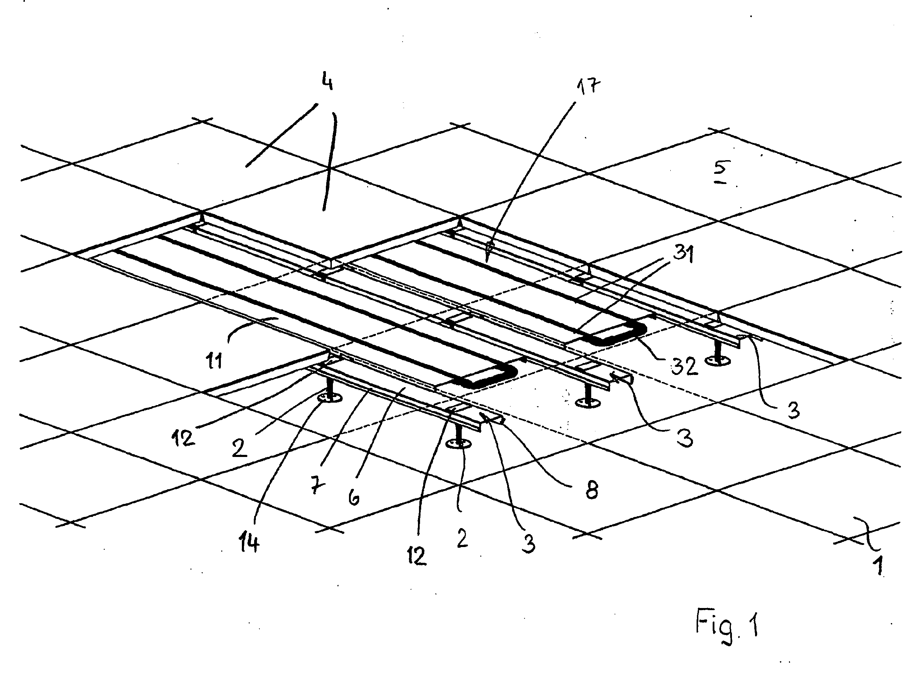

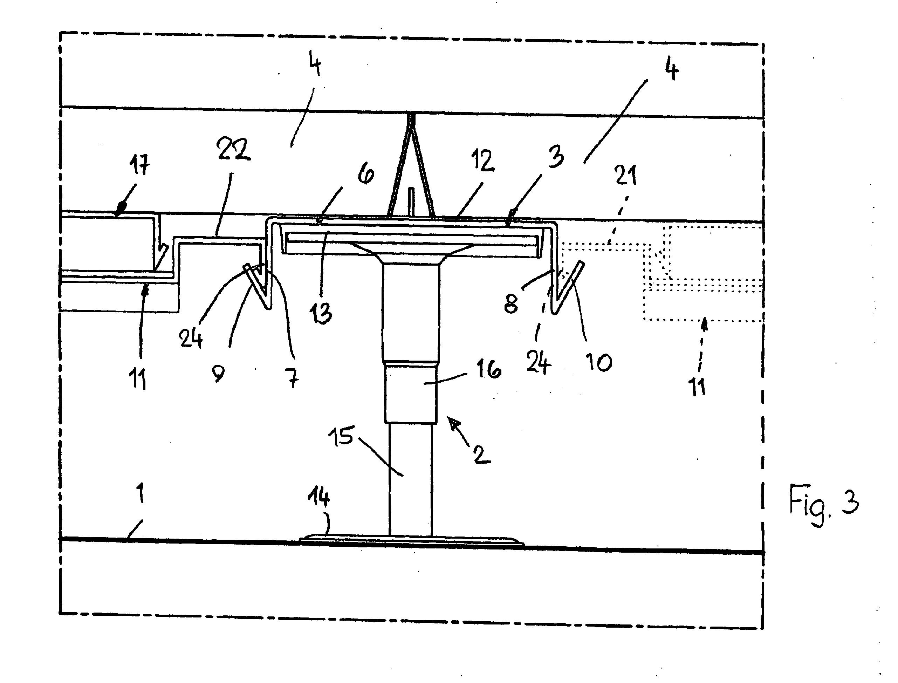

Die Stützen 2 haben, wie sich aus Fig. 3 ergibt, einen scheibenförmigen Fuß 14, mit dem die Stütze 2 auf dem Untergrund 1 steht. Vom Fuß 14, der vorteilhaft kreisrunden Umriß hat (Fig. 1), steht senkrecht ein Stützrohr 15 ab, auf dem ein Stellteil 16 gelagert ist. Es kann Innengewinde aufweisen, mit dem das Stellteil 16 auf ein Außengewinde im oberen Bereich des Stützrohres 15 geschraubt wird. Über die Schraubverbindung läßt sich das Stellteil 16 mit der Auflage 13 stufenlos in der Höhe verstellen. Die auf diese Weise teleskopartig ausgebildeten Stützen 2 erlauben bei der Montage eine problemlose Ausrichtung, so daß die Fußbodenheizung innerhalb kürzester Zeit mit hoher Genauigkeit montiert werden kann. Die Stützen 2 können mit ihren Füßen 14 auf dem Untergrund 1 beispielsweise verschraubt sein, so daß die Schienen 3 in der Einbaulage sicher gehalten sind.

Die Traverse 11 stützt ein Heizregister 17 ab, auf dem die Bodenplatten 4 aufliegen. Die Traverse 11 wird durch eine im wesentlichen U-förmige Schiene gebildet, deren parallel zueinander liegenden Schenkel 18, 19 vertikal in Richtung auf die Bodenplatten 4 verlaufen und durch einen ebenen Quersteg 20 miteinander verbunden sind. Auf dem Quersteg 20 liegt das Heizregister 17 auf.

Die freien Enden 21, 22 der Schenkel 18, 19 der Traverse 11 sind U-förmig abgewinkelt. Mit den nach unten gerichteten Endabschnitten 23, 24 greifen die freien Enden 21, 22 der Traverse 11 in die Schienen 3 ein. Wie Fig. 3 zeigt, sind die Endabschnitte 23, 24 so hakenförmig ausgebildet, daß sie an den Schenkeln 7, 8 sowie an deren freien Enden 9, 10 der Schiene 3 flächig anliegen. Auf diese Weise werden die Traversen 11 an ihren beiden Längsrändern formschlüssig mit den Längsrändern benachbarter Schienen 3 verbunden. Die freien Enden 21, 22 der Traverse 11 liegen mit Abstand unterhalb der Bodenplatten 4.

Das Heizregister 17 wird von oben in die Traverse 11 eingelegt. Das Heizregister 17 hat ein im wesentlichen U-förmiges Wärmeleitblech 25, dessen parallel zueinander liegende Schenkel 26, 27 in Richtung auf den Quersteg 20 der Traverse 11 gerichtet sind. Die Breite des Wärmeleitbleches 25 ist kleiner als die Breite des Quersteges 20 der Traverse 11. Die Stege 26, 27 des Wärmeleitbleches 25 greifen dadurch in die U-förmige Traverse 11 ein.

Die beiden Schenkel 26, 27 sind durch einen Quersteg 28 miteinander verbunden, der im Ausführungsbeispiel zwei parallel zueinander liegende, im Querschnitt halbkreisförmige Vertiefungen 29 und 30 aufweist. Sie sind durch entsprechende Verformungen des Quersteges 28 gebildet und dienen zur Aufnahme von Rohrabschnitten 31 eines Rohres 32, das von einem Heizmedium durchströmt wird. Die Vertiefungen 29, 30 sind so gestaltet, daß die Rohrabschnitte 31 klemmend in den Vertiefungen gehalten sind. Das Rohr 32 läßt sich bequem mit seinen Rohrabschnitten 31 in die Vertiefungen 29, 30 einclipsen, so daß eine einfache Montage gewährleistet ist. Die Rohrabschnitte 31 liegen in der Einbaulage an der Unterseite der Bodenplatten 4 an.

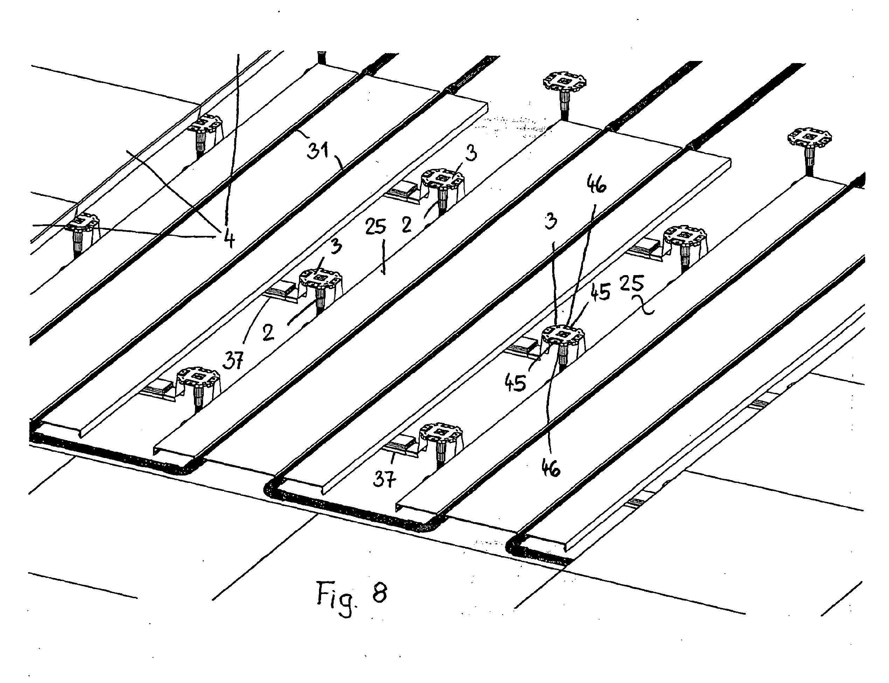

Der Bereich zwischen dem Quersteg 28 des Wärmeleitbleches 25 und dem Quersteg 20 der Traverse 11 ist mit (nicht dargestelltem) Wärmedämmaterial 38 (Fig. 8) gefüllt, das z.B. Polystyrol ist.

Das Wärmeleitblech 17 wird an die Unterseite der Bodenplatten 4 angedrückt, so daß eine innige Verbindung zwischen den Bodenplatten 4 und dem Wärmeleitblech hergestellt wird. Da das Heizregister 17 über die Traverse 11 in die Schienen 3 eingehängt ist, wird der Anpreßdruck des Heizregisters 17 an den Bodenplatten 4 durch entsprechende Höhenverstellung der Stützen 2 erzeugt. Da sie stufenlos in der Höhe eingestellt werden können, läßt sich der Anpreßdruck sowie auch die Ausrichtung der Bodenplatten 4 gegenüber der unter ihnen befindlichen Heizeinrichtung optimal einstellen. Die freien Enden 21, 22 der Schenkel 18, 19 der Traverse 11 liegen mit ausreichendem Abstand unterhalb der Bodenplatten 4, während das Wärmeleitblech 25 über die freien Enden 21, 22 ausreichend weit übersteht. Dadurch kann das Wärmeleitblech 25 zuverlässig fest gegen die Unterseite der Bodenplatten 4 gedrückt werden.

Die Montage der Heizeinrichtung ist problemlos und einfach. Es werden zunächst die Stützen 2 auf dem Untergrund 1 montiert und die Schienen 3 auf den Stützen 2 angeordnet. Anschließend können in die Schienen 3 in der beschriebenen Weise die Traversen 11 eingehängt werden. In die Traversen 11 werden anschließend die Wärmeleitbleche 25 eingelegt. Mit den anschließend verlegten Bodenplatten 4 werden die Wärmeleitbleche 25 in die Traversen 11 gedrückt. Dadurch ist gewährleistet, daß das Wärmeleitblech 25 mit einer ausreichenden Kraft großflächig gegen die Unterseite der Bodenplatten 4 gedrückt wird. Die Wärmeleitbleche 25 sind von den Bodenplatten 4 mechanisch entkoppelt, so daß keine Spannungen übertragen werden können. Die Bodenplatten 4 liegen lediglich auf den Wärmeleitblechen 25 auf. Die Abstützung der Heizeinrichtung und der Bodenplatten 4 erfolgt über die Schienen 3 und die Stützen 2, die die auftretende Last auf den Untergrund 1 übertragen. Die Rohre 32 werden mit dem Heizmedium, zum Beispiel Wasser, durchströmt. Die Wärmeleitbleche 25 nehmen die Wärme des Heizmediums auf und geben sie an die Bodenplatten 4 ab, die ihrerseits die Wärme in den Raum abgeben. Im Kühlfall ist der Wärmefluß entgegengesetzt.

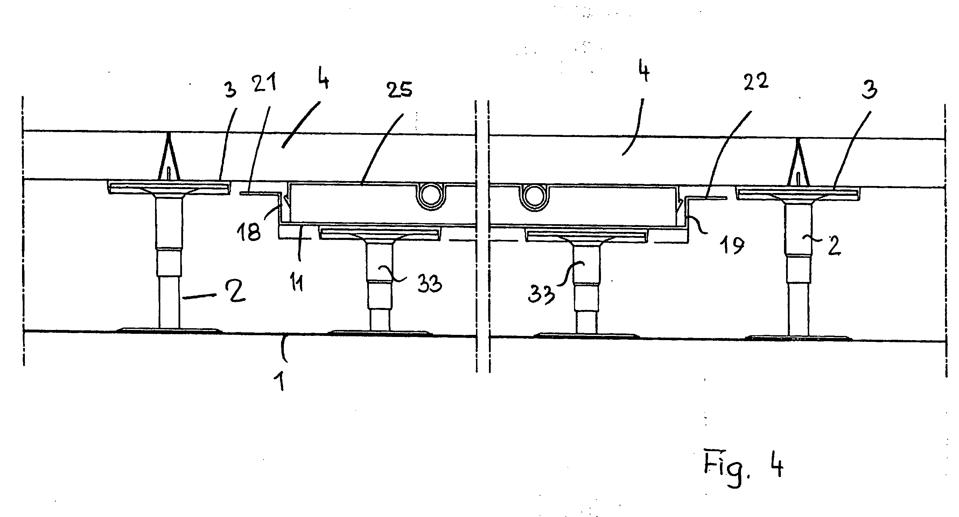

Bei der Ausführungsform gemäß Fig. 4 sind die Traversen 11 nicht in die Schienen 3 eingehängt. Darum werden die Traversen 11 durch zusätzliche Stützen 33 auf dem Untergrund 1 abgestützt. Die Stützen 33 haben vorteilhaft den gleichen grundsätzlichen Aufbau wie die Stützen 2, welche die Schienen 3 tragen. Die Stützen 33 lassen sich stufenlos in der Höhe einstellen, so daß die Wärmeleitbleche 25 gegen die Unterseite der Bodenplatten 4 gedrückt werden können.

Die freien Enden 21, 22 der Schenkel 18, 19 der Traversen 11 sind im Unterschied zur vorigen Ausführungsform gerade ausgebildet und enden mit geringem Abstand von den benachbarten Schienen 3. Im übrigen ist die Ausführungsform gemäß Fig. 4 gleich ausgebildet wie das vorige Ausführungsbeispiel.

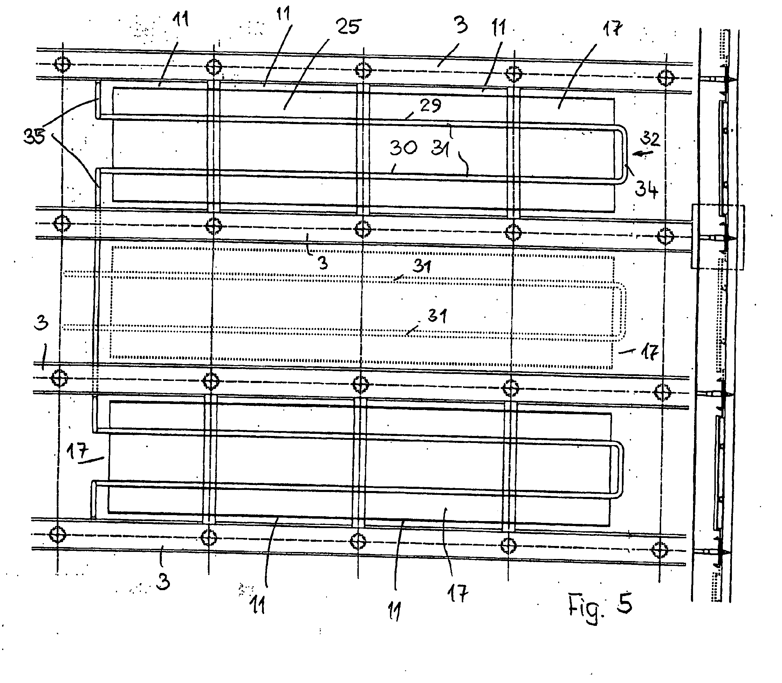

Fig. 5 zeigt ein Verlegungsbeispiel. Beispielhaft sind zwei Heizregister 17 dargestellt, die parallel zueinander verlaufen und die jeweils zwischen zwei Schienen 3 angeordnet sind. Die Schienen 3 und die Heizregister 17 liegen parallel zueinander. Die Rohre 32 sind U-förmig ausgebildet und liegen mit den Rohrabschnitten 31 in den Vertiefungen 29, 30 der Wärmeleitbleche 25. Die beiden Rohrabschnitte 31 sind an einem Ende durch einen Rohrabschnitt 34 miteinander verbunden, der außerhalb des Wärmeleitbleches 25 liegt. Die Rohrabschnitte 31 ragen mit ihren freien Enden über die andere Seite des Wärmeleitbleches und sind dort mit weiteren Rohrabschnitten 35 verbunden, mit denen die Rohre 32 benachbarter Heizregister 17 miteinander verbunden sind.

Die Heizregister 17 bzw. die zugehörigen Wärmeleitbleche 25 sind wesentlich länger als die Traversen 11. Im dargestellten Ausführungsbeispiel wird ein Heizregister 17 von vier Traversen 11 abgestützt, die mit geringem Abstand hintereinander angeordnet sind. Selbstverständlich können die Traversen 11 auch länger ausgebildet sein, gegebenenfalls gleiche Länge wie das Wärmeleitblech 25 haben.

Auf die beschriebene Weise kann die Heizeinrichtung beliebig erweitert werden. Benachbarte Heizregister 17 können ungleiche Abstände voneinander haben, je nach gewünschtem Heizbedarf. In Fig. 5 ist mit punktierten Linien dargestellt, daß zwischen zwei benachbarte Heizregister 17 ein weiteres Heizregister eingesetzt werden kann, dessen Rohrabschnitte 31 an die Rohrabschnitte 33 angeschlossen werden können. Es ist aufgrund der beschriebenen Ausgestaltung der Heizeinrichtung möglich, nachträglich Heizregister 17 einzubauen, wenn dies notwendig sein sollte.

Die Schienen 3 können sich über die Länge bzw. Breite des zu beheizenden Raumes erstrecken. Die Traversen 11 lassen sich dann an jeder beliebigen Stelle in die Schienen 3 einhängen. Haben die Traversen 11 eine Ausbildung entsprechend Fig. 4, müssen die Schienen 3 nicht durchgehend über die Breite bzw. Länge des aufzuheizenden Bodens verlaufen, sondern können auch kürzer sein, da in diesem Falle die Traversen 11 über die Stützen 33 auf dem Untergrund 1 abgestützt werden.

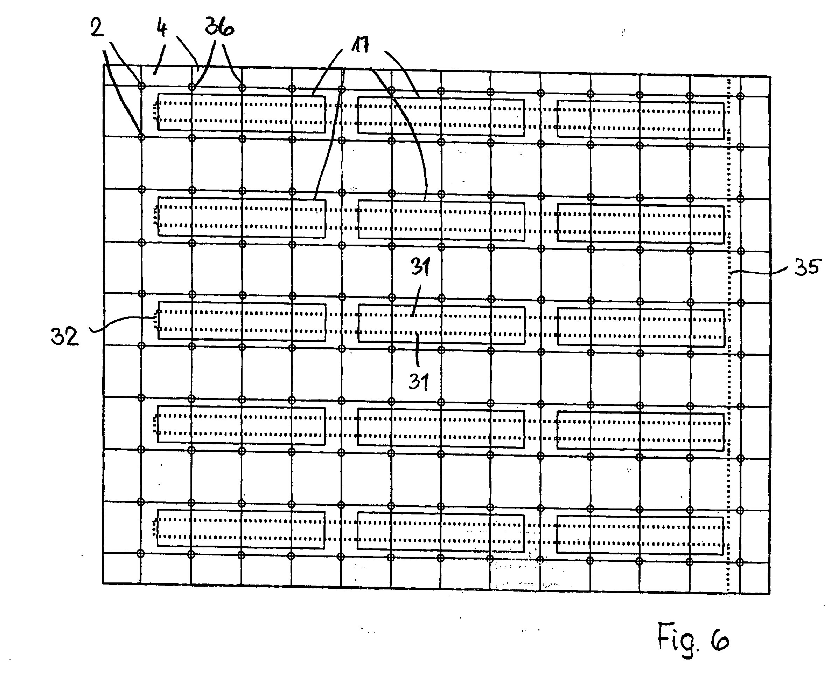

Fig. 6 zeigt eine weitere Möglichkeit einer Verlegung der Heizregister 17. Sie sind in diesem Falle in parallel zueinander liegenden Reihen mit geringem Abstand hintereinander angeordnet. Die freien Enden der Rohrabschnitte 31 der Rohre 32 benachbarter Heizregisterreihen sind über die Rohrabschnitte 35 miteinander verbunden, so daß sich ein etwa mäanderförmig verlaufendes Heizungsrohr ergibt, das vom jeweiligen Heizmedium durchströmt wird.

Die Bodenplatten 4 sind entsprechend den vorherigen Ausführungsformen an den Knotenpunkten 36, an denen vier benachbarte Bodenplatten aneinanderstoßen, durch die Stützen 2 unterstützt.

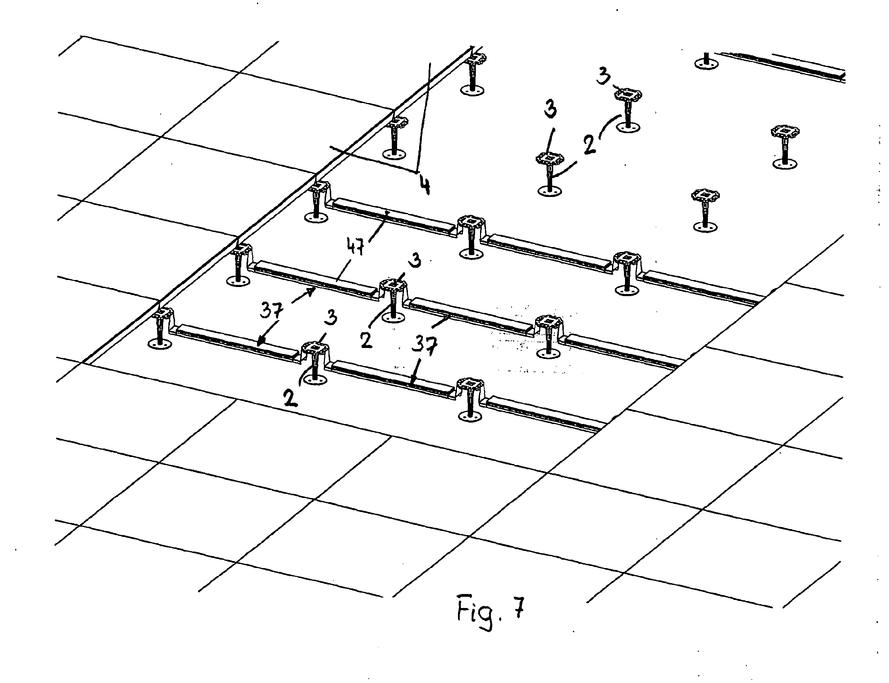

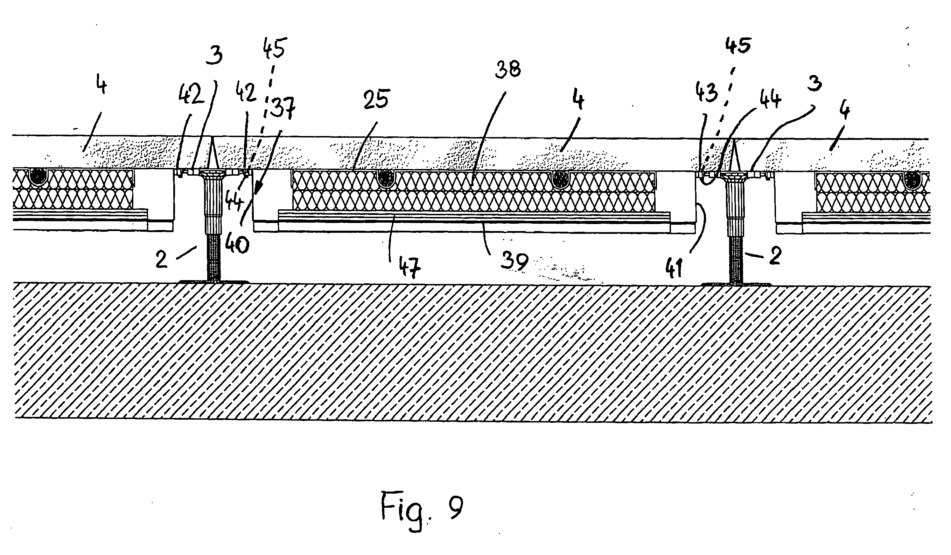

Bei der Ausführungsform gemäß den Fig. 7 bis 9 werden die Wärmeleitbleche 25 auf Querträgern 37 abgestützt, die sich senkrecht zu den Wärmeleitblechen 25 erstrecken und mit Abstand hintereinander angeordnet sind (Fig. 7). Innerhalb einer Reihe sind die Querträger 37 fluchtend zueinander angeordnet. Die Querträger 37 haben im wesentlichen U-Form und sind durch entsprechend gestaltete Schienen gebildet. Die Wärmeleitbleche 25 liegen unter Zwischenlage des Wärmedämmaterials 38 (Fig. 9) auf dem Quersteg 39 des Querträgers 37 auf (Fig. 9). Der Quersteg 39 verbindet zwei aufwärts gerichtete Schenkel 40, 41, deren freie Enden 42, 43 rechtwinklig nach außen abgewinkelt sind. Über die Unterseite der freien Enden 42, 43 steht jeweils wenigstens ein Steckelement 44 vor, das in eine Stecköffnung 45 im Aufhängeelement 3 der Stützen 2 eingehängt wird. Das Aufhängeelement 3 ist im Unterschied zur Ausführungsform nach den Fig. 1 bis 3 nicht als gesondert auflegbares Element, sondern einstückig mit der Stütze 2 ausgebildet. Wie die Fig. 7 und 8 zeigen hat das Aufhängeelement 3 kreisförmigen Umriß und ist am oberen Ende der Stütze 2 befestigt. Wie Fig. 8 zeigt, weist das Aufhängelement 3 über seinen Umfang gleichmäßig verteilt vier Stecköffnungen 45 auf, so daß an jeder Stütze 2 vier rechtwinklig zueinander liegende Querträger 37 eingehängt werden können. Die Stecköffnungen 45 liegen vorteilhaft in Vertiefungen 46, in die die freien Enden 42, 43 des Querträgers 37 eingreifen. Die Höhe der Vertiefungen 46 entspricht der Dicke der freien Enden 42, 43, so daß diese nicht über die Oberseite des Aufhängeelementes 3 überstehen. Dadurch werden die Bodenplatten 4 auf den Aufhängeelementen 3 einwandfrei abgestützt.

Auf dem Quersteg 39 des Querträgers 37 liegt ein Isolierstreifen 47 auf, der geringfügig kürzer als der Quersteg 39 ist und der für eine federnde Abstützung der Wärmeisolierung 38 dient.

Der Quersteg 39 des Querträgers 37 kann aus wenigstens zwei in Längsrichtung gegeneinander verstellbaren Teilen bestehen, so daß beim Einbau der Heizeinrichtung geringfügige Maßabweichungen ausgeglichen werden können.

Im übrigen sind die Wärmeleitbleche 25, die Stützen 2 und die Bodenplatten 4 gleich ausgebildet wie beim Ausführungsbeispiel nach den Fig. 1 bis 3.

Die Bodenplatten 4 können jederzeit ausgetauscht werden, ohne daß in das Heizsystem selbst eingegriffen werden muß. Die Heizeinrichtung ermöglicht die Erwärmung oder die Abkühlung des Hohlraum- bzw. Doppelbodens. Selbstverständlich kann auch das Heizsystem selbst im Bedarfsfall einfach repariert werden, indem die entsprechenden Bodenplatten 4 abgenommen werden. Dann ist die Heizeinrichtung für Reparaturzwecke frei zugänglich.

Bei sämtlichen beschriebenen Ausführungsbeispielen ist es vorteilhaft, wenn das Wärmeleitblech 25, die Wärmeisolierung 38 und die Rohrabschnitte 31 eine vormontierte Einheit bilden. Dadurch lassen sich die beschriebenen Heizeinrichtungen mit verringertem Montageaufwand einfach und schnell montieren.

## Patentansprüche

1. Heizeinrichtung für Fußböden (5), mit wenigstens einem Rohr (32) für ein Heizmedium, vorzugsweise Wasser, das von wenigstens einem Wärmeleitelement (25) aufgenommen ist, das an der Unterseite von den Fußboden bildenden Bodenplatten (4) anliegt und das auf wenigstens einem Träger (11, 37) abgestützt ist, und mit Stützen (2), die den Träger (11, 37) und die Bodenplatten (4) auf dem Untergrund (1) abstützen,
**dadurch gekennzeichnet, dass** der Träger (11, 37) mit seinen Längsrändern (18, 21; 19, 22) in Einhängeprofile (7, 9; 8, 10) eingehängt ist, die an Aufhängeelementen (3) vorgesehen sind, die auf den Stützen (2) vorgesehen sind und auf denen die Bodenplatten (4) abgestützt sind.

2. Heizeinrichtung nach Anspruch 1,
**dadurch gekennzeichnet, dass** das Wärmeleitelement (25) unter Druck an der Unterseite der Bodenplatten (4) anliegt.

3. Heizeinrichtung nach Anspruch 1 oder 2,
**dadurch gekennzeichnet, dass** die Aufhängeelemente (3) Profilschienen sind, die auf den Stützen (2) aufliegen.

4. Heizeinrichtung nach Anspruch 1 oder 2,
**dadurch gekennzeichnet, dass** die vorteilhaft im Wesentlichen kreisförmigen Umriss aufweisenden Aufhängeelemente (3) fest mit den Stützen (2) verbunden sind.

5. Heizeinrichtung nach Anspruch 4,
**dadurch gekennzeichnet, dass** die Aufhängeelemente (3) Steckaufnahmen (45) für Steckelemente (44) des Trägers (37) aufweisen, die vorteilhaft in Vertiefungen (46) in der den Bodenplatten (4) zugewandten Oberseite der Aufhängeelemente (3) vorgesehen sind.

6. Heizeinrichtung nach einem der Ansprüche 1 bis 5,
**dadurch gekennzeichnet, dass** der Träger (11, 37) im Wesentlichen U-Form hat.

7. Heizeinrichtung nach Anspruch 5 oder 6,
**dadurch gekennzeichnet, dass** die Steckelemente (44) an abgewinkelten freien Enden (42, 43) von Schenkeln (40, 41) des Trägers (37) angeordnet sind, und dass vorteilhaft die Höhe der Vertiefungen (46) der Dicke der freien Enden (42, 43) der Schenkel (40, 41) des Trägers (37) entspricht.

8. Heizeinrichtung nach einem der Ansprüche 1 bis 7,
**dadurch gekennzeichnet, dass** das Wärmeleitelement (25) im Wesentlichen U-Form hat und vorteilhaft mit nach unten gerichteten Schenkeln (26, 27) in den Träger (11, 37) ragt.

9. Heizeinrichtung nach einem der Ansprüche 1 bis 8,
**dadurch gekennzeichnet, dass** das Wärmeleitelement (25) wenigstens eine vorteilhaft durch eine Profilierung des Wärmeleitelementes (25) gebildete Aufnahme (29, 30) für das Rohr (32) aufweist.

10. Heizeinrichtung nach Anspruch 9,
**dadurch gekennzeichnet, dass** das Rohr (32) in der Aufnahme (29, 30) klemmend gehalten ist.

11. Heizeinrichtung nach einem der Ansprüche 1 bis 10,
**dadurch gekennzeichnet, dass** die Aufhängelemente (3) an der Unterseite der Bodenplatten (4) anliegen

12. Heizeinrichtung nach einem der Ansprüche 1 bis 11,
**dadurch gekennzeichnet, dass** die Bodenplatten (4) abnehmbar auf dem Wärmeleitelement (25) aufliegen

13. Heizeinrichtung nach einem der Ansprüche 1 bis 12,
**dadurch gekennzeichnet, dass** das Wärmeleitelement (25), das Rohr (32) und eine Wärmeisolierung (38) eine vormontierte Einheit bilden.

## Claims

1. Underfloor heating (5) with at least one tube (32) for a heating medium, preferably water, which is held by at least one element of heat conduction (25), which is applied to the underside of floor panels (4) forming the floor and which is supported by at least one support (11, 37) and with props (2) underpinning the support (11, 37) and the floor panels (4) onto the sub-floor (1),
**characterised in that** the support (11, 37) via its longitudinal rims (18, 21; 19, 22) is hung on nest profiles (7, 9; 8, 10) provided at suspension elements (3) provided onto the props (2) and on which the floor panels (4) are supported.

2. Heating according to claim 1,
**characterised in that** the element of heat conduction (25) abuts under pressure to the underside of the floor panels (4).

3. Heating according to claim 1 or 2,
**characterised in that** the suspension elements (3) are profile rails, laying on the props (2).

4. Heating according to claim 1 or 2,
**characterised in that** the elements (3) advantageously comprising substantially circular contour are firmly connected to the props (2).

5. Heating according to claim 4,
**characterised in that** the suspension elements (3) comprise plug-in receptacles (45) for plug-in elements (44) of the support (37), which are advantageously provided within deepenings (46) of the upper side of the suspension elements (3) facing the floor panels (4).

6. Heating according to one of the claims 1 to 5,
**characterised in that** the support (11, 37) is basically U-shaped.

7. Heating according to claim 5 or 6,
**characterised in that** the plug-in elements (44) are arranged at angled free ends (42, 43) of sides (40, 41) of the support (37) and that the height of the deepenings (46) corresponds advantageously to the thickness of the free ends (42, 43) of the sides (40, 41) of the support (37).

8. Heating according to one of the claims 1 to 7,
**characterised in that** the element of heat conduction (25) is basically U-shaped and projects advantageously with sides (26, 27) directed downwards into the support (11, 37).

9. Heating according to one of the claims 1 to 8,
**characterised in that** the heat conducting element (25) comprises at least one receptacle (29, 30), formed advantageously by a profiling of the heat conducting element (25) for the tube (32).

10. Heating according to claim 9,
**characterised in that** the tube (32) is held squeezed within the receptacle (29, 30).

11. Heating according to one of the claims 1 to 10,
**characterised in that** the suspension elements (3) contact at the underside of the floor panels (4).

12. Heating according to one of the claims 1 to 11,
**characterised in that** the floor panels (4) lay detachable on the heat conducting element (25).

13. Heating according to one of the claims 1 to 12,
**characterised in that** the heat conducting element (25), the tube (32) and a thermal insulation (38) form a preassembled unit.

## Revendications

1. Installation de chauffage par le sol (5) avec au moins un tuyau (32) pour un medium chauffant, de préférence de l'eau, étant recueilli par au moins un élément thermoconducteur (25) celui-ci étant ajusté à la face inférieure des plaques de fond (4) formant le sol et s'appuyant sur au moins un support (11, 37) et avec des soutiens (2), qui supportent les plaques de fond (4) sur le fond (1),
**caractérisée en ce que** le support (11, 37) est accroché avec ses bords longitudinaux (18, 21; 19, 22) dans des profils d'accrochage (7, 9; 8, 10) qui sont prévus sur les éléments de suspension (3) étant eux-mêmes prévus sur les soutiens (2) sur lesquels s'appuient les plaques de fond (4).

2. Installation de chauffage selon revendication 1,
**caractérisée en ce que** l'élément thermoconducteur (25) s'ajuste sous pression à la face inférieure des plaques de fond (4).

3. Installation de chauffage selon revendication 1 ou 2,
**caractérisée en ce que** les éléments de suspension (3) sont des rails profilés se reposant sur les soutiens (2).

4. Installation de chauffage selon revendication 1 ou 2,
**caractérisée en ce que** les éléments de suspension (3), comprenant avantageusement un contour en substance circulaire sont connectés fixement avec les soutiens (2).

5. Installation de chauffage selon revendication 4,
**caractérisée en ce que** les éléments de suspension (3) comprennent des réceptions enfichables (45) pour des éléments enfichables (44) du support (37) lesquels sont prévus avantageusement dans des cavités (46) situées à la face supérieure des éléments de suspension (3) faisant face aux plaques de fond (4).

6. Installation de chauffage selon l'une des revendications de 1 à 5,
**caractérisée en ce que** le support (11, 37) a en substance la forme d'un U.

7. Installation de chauffage selon revendication 5 ou 6,
**caractérisée en ce que** les éléments enfichables (44) sont disposés aux extrémités libres inclinées (42, 43) des branches (40, 41) du support (37) et que avantageusement la hauteur des cavités (46) correspond à l'épaisseur des extrémités libres (42, 43) des branches (40, 41) du support (37).

8. Installation de chauffage selon l'une des revendications de 1 à 7,
**caractérisée en ce que** l'élément thermoconducteur (25) a essentiellement la forme d'un U et se projette avantageusement par des branches (26, 27) dans le support (11, 37).

9. Installation de chauffage selon l'une des revendications de 1 à 8,
**caractérisée en ce que** l'élément thermoconducteur (25) comprend au moins une réception (29, 30) pour le tuyau (32), formée avantageusement par un profilage de l'élément thermoconducteur (25).

10. Installation de chauffage selon revendication 9,
**caractérisée en ce que** le tuyau (32) est tenu serré dans la réception (29, 30).

11. Installation de chauffage selon l'une des revendications de 1 à 10,
**caractérisée en ce que** les éléments de suspension (3) sont ajustés dans la face inférieure des plaques de fond (4).

12. Installation de chauffage selon l'une des revendications de 1 à 11,
**caractérisée en ce que** les plaques de fond (4) sont posées de façon démontable sur l'élément thermoconducteur (25).

13. Installation de chauffage selon l'une des revendications de 1 à 12,
**caractérisée en ce que** l'élément thermoconducteur (25), le tuyau (32) et une isolation thermique (38) forment une unité préassemblée.
